# EUROPEAN PATENT SPECIFICATION

(11) **EP 3 228 588 B1**
(45) Date of publication and mention of the grant of the patent: **29.04.2020**
(21) Application number: 15851413.3
(22) Date of filing: 07.10.2015
(51) Int. Cl.: C01B 32/05, B01J 23/42, H01M 4/86, H01M 4/96, H01M 8/10, H01M 8/0234, H01M 8/0243, H01M 8/0245, H01M 4/88, H01M 8/1018

(54) **CARBON SHEET, GAS DIFFUSION ELECTRODE BASE MATERIAL, AND FUEL CELL**
KOHLENSTOFFSCHICHT, BASISMATERIAL FÜR GASDIFFUSIONSELEKTRODE UND BRENNSTOFFZELLE
FEUILLE DE CARBONE, MATÉRIAU DE BASE D'ÉLECTRODE À DIFFUSION GAZEUSE ET PILE À COMBUSTIBLE

(30) Priority: 17.10.2014 JP 2014212422
(43) Date of publication of application: 11.10.2017
(73) Proprietor: Toray Industries, Inc., Tokyo 103-8666 (JP)
(72) Inventor: UTSUNOMIYA, Masamichi, Otsu-shi Shiga 520-8558 (JP); HASHIMOTO, Masaru, Otsu-shi Shiga 520-2141 (JP); SODE, Katsuya, Otsu-shi Shiga 520-2141 (JP); KAMAE, Toshiya, Otsu-shi Shiga 520-8558 (JP)
(74) Representative: Kador & Partner PartG mbB
(86) International application number: PCT/JP2015/078494
(87) International publication number: WO 2016/060045

(56) References cited:
- EP-A2- 1 063 717
- WO-A1-01/17047
- WO-A1-2014/030553
- JP-A- H05 251 086
- JP-A- H09 245 800
- JP-A- 2006 302 697
- JP-A- 2008 511 119
- JP-A- 2010 170 826
- JP-A- 2013 065 413
- JP-A- 2014 232 691
- JP-B1- 5 562 509
- US-A1- 2006 046 926
- US-A1- 2007 154 777

## Description

### TECHNICAL FIELD

The present invention relates to a carbon sheet which is suitably used in a fuel cell, particularly in a polymer electrolyte fuel cell; a gas diffusion electrode substrate including microporous layer; and a fuel cell including the gas diffusion electrode substrate.

### BACKGROUND ART

A polymer electrolyte fuel cell in which a hydrogencontaining fuel gas and oxygen-containing oxidizing gas are supplied to an anode and cathode, respectively, and an electromotive force is generated by an electrochemical reaction occurring at both poles is generally constituted by laminating a bipolar plate, a gas diffusion electrode substrate, a catalyst layer, an electrolyte membrane, a catalyst layer, a gas diffusion electrode substrate and a bipolar plate in this order. The gas diffusion electrode substrate is required to have high gas diffusivity for allowing a gas supplied from the bipolar plate to be diffused into the catalyst layer and high water removal performance for discharging water generated by the electrochemical reaction to the bipolar plate, as well as high electrical conductivity for extracting generated electric current, and thus gas diffusion electrode substrates with a microporous layer formed on a surface of a carbon sheet as a substrate, which is composed of a carbon fiber and so on, are widely used.

However, as a problem with the gas diffusion electrode substrate, for example, the following problem is known: when the polymer electrolyte fuel cell is operated at a relatively low temperature of below 70°C in a high current density region, as a result of blockage of the gas diffusion electrode substrate by water generated in a large amount and shortage in the gas supply, the fuel cell performance is impaired (this problem may be hereinafter described as "flooding"). A large amount of water is generated in a high current density region not only at a low temperature but also at a high temperature. Thus, the gas diffusion electrode substrate is required to have higher water removal performance.

Thus, there has been proposed a gas diffusion electrode substrate in which microporous layers different in hydrophobicity are stacked on one another to provide a gradient in hydrophobicity in such a manner that the gas diffusion electrode substrate has higher hydrophobicity on the catalyst layer side (see Patent Document 1).

There has been proposed a method in which at least two kinds of hydrophobic materials having different particle sizes are applied to a surface of a gas diffusion electrode substrate which is to be provided with a catalyst layer, so that the gas diffusion electrode substrate has higher hydrophobicity on a side on which the gas diffusion electrode substrate is in contact with the catalyst layer (see Patent Document 2).

There have been proposed fuel cells comprising a gas diffusion electrode substrate comprising a PTFE-bonded, 180 um thick Toray TGPH-060 porous carbon sheet the latter comprising carbon fibers, coated with a microporous layer of carbon black and a fluoropolymer (see Patent Documents 3 and 4). Further, there has been proposed a fuel cell comprising a gas diffusion electrode substrate, a porous carbon sheet comprising a first fluoropolymer - regarded as binder - and carbon fibers (see Patent Document 5).

### PRIOR ART DOCUMENTS

### PATENT DOCUMENTS

Patent Document 1: Japanese Patent Laid-open Publication No. 07-134993
Patent Document 2: Japanese Patent Laid-open Publication No. 2005-116338
Patent Document 3: US Patent Application Publication No. 2006/046926 A1
Patent Document 4: European Patent Application Publication No. 1063717 A2
Patent Document 5: US Patent Application Publication No. 2007/154777 A1

### SUMMARY OF THE INVENTION

### PROBLEMS TO BE SOLVED BY THE INVENTION

In the inventions described in Patent Documents 1 and 2, generated water can be quickly moved from a surface of the gas diffusion electrode substrate, which is provided with a catalyst layer, to the opposite surface by providing a gradient in hydrophobicity. However, even in the inventions described in Patent Documents 1 and 2, flooding cannot be sufficiently suppressed, and fuel cell performance is still insufficient.

In view of the background of the conventional arts, an object of the present invention is to provide a carbon sheet suitable for use in a gas diffusion electrode substrate, which has an excellent anti-flooding characteristic that has been heretofore difficult to achieve.

Another object of the present invention is to provide a gas diffusion electrode substrate obtained using the carbon sheet as a substrate, and a fuel cell including the gas diffusion electrode substrate.

### SOLUTIONS TO THE PROBLEMS

The present inventors have extensively conducted studies, and found that the reason why flooding cannot be sufficiently suppressed even in the inventions described in Patent Documents 1 and 2 is that since hydrophobicity is low on the opposite surface, generated water is accumulated on the opposite surface, particularly in a bipolar plate rib portion after quickly moving through the inner part of the gas diffusion electrode substrate.

For solving the above-mentioned problems, the present invention has the following configurations.

Provided is a porous carbon sheet, the carbon sheet (1) being a porous carbon sheet comprising a carbon fiber and a binding material, and a hydrophobic material is included in the binding material, wherein said hydrophobic material is a fluorine-based polymer, wherein when among layers obtained by dividing the carbon sheet in a through-plane direction thereof into three equal parts within a section (10) extending from a surface (5) having a 50% average fluorine intensity, which is closest to one surface (2), to a surface (6) having a 50% average fluorine intensity, which is closest to the other surface (3), one of a layer (7) close to one surface (5) has the largest average fluorine intensity, is a layer X, the other one of a layer (9) close to the other surface (6) has a smaller average fluorine intensity than that of the layer X (7), is a layer Y, and a layer (8) between the layer X (7) and the layer Y (9) is a layer Z, and wherein when a surface closest to the layer X is a surface X, the gas diffusion electrode substrate has a microporous layer on the surface X side of the carbon sheet (1), characterized in that the average fluorine intensity of the layer decreases in the order of the layer X (7), the layer Y (9) and the layer Z (8).

### EFFECTS OF THE INVENTION

According to the present invention, a carbon sheet having an excellent anti-flooding characteristic that has been heretofore difficult to achieve can be obtained. The carbon sheet of the present invention is capable of improving fuel cell performance particularly at a low temperature, and is suitably used in a gas diffusion electrode substrate.

### BRIEF DESCRIPTION OF THE DRAWINGS

Fig. 1 is a schematic sectional view for explaining a configuration of a carbon sheet of the present invention.
Fig. 2 is a schematic view showing how to determine the fluorine intensity of the carbon sheet of the present invention.

### MODE FOR CARRYING OUT THE INVENTION

A carbon sheet of the present invention is a porous carbon sheet including a carbon fiber and a binding material, wherein when among layers obtained by dividing the carbon sheet in a through-plane direction thereof into three equal parts within a section extending from a surface having a 50% average fluorine intensity, which is closest to one surface, to a surface having a 50% average fluorine intensity, which is closest to the other surface, one of a layer close to one surface and a layer closest to the other layer, which has a larger average fluorine intensity, is a layer X, the other one of a layer close to one surface and a layer closest to the other layer, which has a smaller average fluorine intensity, is a layer Y, and a layer between the layer X and the layer Y is a layer Z, the average fluorine intensity of the layer decreases in the order of the layer X, the layer Y and the layer Z. Here, the 50% average fluorine intensity is a value of 50% of the average of fluorine intensities measured along a straight line extending in a through-plane direction of the carbon sheet from one surface to the other surface of the carbon sheet. The "surface having a 50% average fluorine intensity, which is closest to one surface" represents a virtual surface that is substantially parallel to a surface of the carbon sheet and that includes a set of points showing a 50% average fluorine intensity, which are closest to one surface on a straight line in a through-plane direction of the carbon sheet in the measurement. The "surface having a 50% average fluorine intensity, which is closest to one surface" is not required to be actually a continuous surface in the carbon sheet. The phrase "the average fluorine intensity of the layer decreases in the order of the layer X, the layer Y and the layer Z" means that the layers satisfy the relationship of layer X > layer Y > layer Z in terms of the average fluorine intensity.

Hereinafter, the carbon sheet, a gas diffusion electrode substrate and a fuel cell according to the present invention will be described in detail.

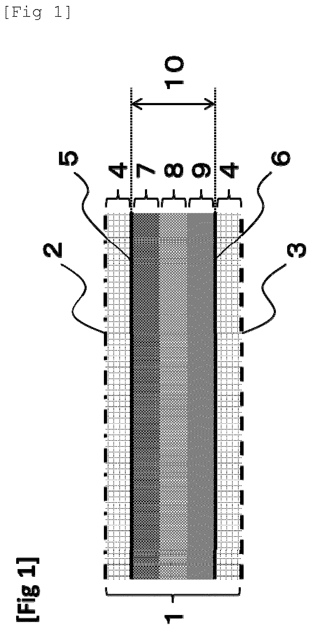

First, the configuration of the carbon sheet in the present invention will be described with reference to the drawings. Fig. 1 is a schematic sectional view for illustratively explaining a configuration of a carbon sheet according to one embodiment of the present invention.

In Fig. 1, when among layers obtained by dividing the carbon sheet in a through-plane direction into three equal parts within a section (10) extending from a surface (surface XX(5)) having a 50% average fluorine intensity, which is closest to one surface (surface X(2)), to a surface (surface YY(6)) having a 50% average fluorine intensity, which is closest to the other surface (surface Y(3)), a layer which is close to one surface (surface X(2)) and has the largest layer average fluorine intensity is a layer X, a layer which is close to the other surface (surface Y(3)) and has a layer average fluorine intensity smaller than that of the layer X is a layer Y, and a layer situated between the layer X and the layer Y is a layer Z, the average fluorine intensity decreases in the order of the layer X, the layer Y and the layer Z. Thus, the carbon sheet (1) of the present invention includes a layer X(7), a layer Y(9), a layer Z(8), and a layer (4) having an average fluorine intensity less than the 50% average fluorine intensity.

### [Carbon Sheet]

For example, the carbon sheet of the present invention can be prepared through the steps of preparation of a porous material including a carbon fiber as described below, impregnation of a resin composition, lamination and annealing performed as necessary, carbonation, and hydrophobic treatment performed as necessary. The carbon sheet of the present invention is a porous carbon sheet including a carbon fiber and a binding material, and can be subjected to a hydrophobic treatment as necessary.

It is important that the carbon sheet of the present invention is porous. When the carbon sheet is porous, both excellent gas diffusivity and excellent water removal performance can be achieved. For making the carbon sheet porous, a porous material is preferably used as a material to be used for preparing the carbon sheet.

Preferably, the carbon sheet of the present invention has high electrical conductivity for extracting generated electric current in addition to excellent gas diffusivity and water removal performance as described above. For obtaining the above-mentioned carbon sheet, a porous material having electrical conductivity is preferably used as a material to be used for preparing the carbon sheet. More specifically, it is preferred to use a porous material including a carbon fiber, such as a carbon fiber woven material, a carbon paper or a carbon fiber nonwoven fabric, or a carbonaceous foamed porous material. In particular, a porous material including a carbon fiber is more preferably used because of its excellent corrosion resistance, and a carbon paper obtained by bonding a carbon fiber papermaking substrate to a carbide (binding material) is further preferably used because it is excellent in property of absorbing a change in dimension of an electrolyte membrane in a through-plane direction, i.e. "spring property".

In the carbon sheet of the present invention, the average fluorine intensity of the layer Z is smaller than the average fluorine intensity of the layer X, and therefore generated water produced due to electrical power generation quickly moves from the layer X to the layer Z. Since the average fluorine intensity of the layer Y is larger than that of the layer Z, generated water is hardly accumulated in a portion that is in contact with a bipolar plate rib portion of the layer Y, so that flooding is suppressed. Generated water flowing through a bipolar plate channel is hardly returned to the carbon sheet. When the layers are arranged in such a manner that the average fluorine intensity of the layer decreases in the order of the layer X, the layer Y and the layer Z as described above, the anti-flooding characteristic can be improved as compared to, for example, a case where the average fluorine intensity decreases in the order of the layer X, the layer Z and the layer Y.

When the average fluorine intensity of the layer Y of the carbon sheet of the present invention is 1, the average fluorine intensity of the layer X is preferably 1.30 to 9.00, more preferably 1.40 to 8.00, further preferably 1.50 to 7.00. When the ratio of the average fluorine intensity of the layer X to the average fluorine intensity of the layer Y is 1.30 or more, more preferably 1.40 or more, further preferably 1.50 or more, generated water is easily discharged from the layer X side to the layer Y side. When the average fluorine intensity of the layer Y is 1, the average fluorine intensity of the layer X is 9.00 or less, more preferably 8.00 or less, further preferably 7.00 or less, the relative average fluorine intensity of the layer Y increases. In this case, the layer Y may have an average fluorine intensity above a certain level, and therefore have hydrophobicity above a certain level. Resultantly, generated water is hardly accumulated in a portion that is in contact with a bipolar plate rib portion of the layer Y so that flooding is suppressed.

When the average fluorine intensity of the layer Y of the carbon sheet of the present invention is 1, the average fluorine intensity of the layer Z is preferably 0.10 to 0.90, more preferably 0.30 to 0.80, further preferably 0.50 to 0.70. When the average fluorine intensity of the layer Y is 1, the average fluorine intensity of the layer Z is 0.90 or less, more preferably 0.80 or less, further preferably 0.70 or less, and thus the average fluorine intensity in the carbon sheet of the present invention decreases in the order of the layer X, the layer Y and the layer Z, so that the ratio of the average fluorine intensity of the layer Z to the average fluorine intensity of the layer X can be reduced. Accordingly, the difference in average fluorine intensity between the layer X and the layer Z increases, so that generated water produced due to electrical power generation easily moves quickly from the layer X to the layer Z. Resultantly, the rate at which generated water is discharged from the layer X is remarkably increased, so that fuel cell performance is easily improved. When the ratio of the average fluorine intensity of the layer Z to the average fluorine intensity of the layer Y is 0.10 or more, more preferably 0.30 or more, further preferably 0.50 or more, the relative water removal performance of the layer Z is improved, so that generated water is hardly accumulated in the layer Z, leading to suppression of flooding.

Also, the thickness of the carbon sheet of the present invention is preferably 50 to 230 µm, more preferably 70 to 180 µm, further preferably 90 to 130 µm. When the thickness of the carbon sheet is 230 µm or less, more preferably 180 µm or less, further preferably 130 µm or less, gas diffusivity is easily enhanced, and generated water is easily discharged. Further, the size of a fuel cell as a whole is easily reduced. Meanwhile, when the thickness of the carbon sheet is 50 µm or more, more preferably 70 µm or more, further preferably 90 µm or more, gas diffusion in an in-plane direction in the carbon sheet is efficiently performed, and fuel cell performance is easily improved.

The thickness of the carbon sheet of the present invention is determined by the following method. Specifically, a carbon sheet and a gas diffusion electrode substrate are placed on a smooth surface plate, and a difference in height between the case of presence of a measurement object and the case of absence of the measurement object is measured in a state in which a pressure of 0.15 MPa is applied. Samples are taken at 10 different parts, measured values of the difference in height are averaged, and the average thus obtained is defined as a thickness.

In the present invention, the density of the carbon sheet is preferably within the range of 0.20 to 0.40 g/cm³, more preferably within the range of 0.22 to 0.35 g/cm³, further preferably within the range of 0.24 to 0.30 g/cm³. When the density of the carbon sheet is 0.20 g/cm³ or more, more preferably 0.22 g/cm³ or more, further preferably 0.24 g/cm³ or more, the mechanical properties of the carbon sheet are improved, so that the electrolyte membrane and the catalyst layer is easily supported. In addition, high electrical conductivity is attained, and the fuel cell performance is thus easily improved. Meanwhile, when the density of the carbon sheet is 0.40 g/cm³ or less, more preferably 0.35 g/cm³ or less, further preferably 0.30 g/cm³ or less, water removal performance is improved, so that flooding is easily suppressed.

A carbon sheet having a density as described above can be obtained by controlling the areal weight of the carbon fiber, the loading amount of the resin component based on the amount of the carbon fiber, and the thickness of the carbon sheet as described below in a method for producing a carbon sheet. Here, the density of the carbon sheet can be determined by dividing the areal weight (mass per unit area), which is measured using an electronic balance, by the thickness of the carbon sheet in a state of being compressed at a pressure of 0.15 MPa.

In the present invention, the binding material represents components other than the carbon fiber in the carbon sheet. The binding material includes a resin composition that is a material serving to bind carbon fibers, or a carbide thereof. When a hydrophobic material is used in the carbon sheet of the present invention, the hydrophobic material is included in the binding material. In the present invention, the "resin composition" represents a resin composition, or a resin composition and a carbide thereof, or a carbide of a resin composition for convenience' sake. The carbide of a resin composition is a carbonized resin component in the resin composition.

The carbon sheet of the present invention in which the average fluorine intensity of the layer decreases in the order of the layer X, the layer Y and the layer Z is obtained by controlling in a through-plane direction the fiber diameter constituting the carbon sheet, and the density, and the distribution of the binding material, but it is more preferred to control the distribution of the binding material.

The method of controlling the distribution of a binding material in a through-plane direction may be a method in which three prepregs that are each obtained by impregnating a resin composition into a porous material such as a carbon fiber papermaking substrate prepared by a method as described below and that are different in amount of the impregnated resin composition, and laminated and molded, and carbonized to obtain a carbon sheet, or a method in which one prepreg made to have a distribution in the loading amount of resin by using a resin addition method in which a distribution is formed in the loading amount of a resin composition in impregnation of the resin composition into a porous material such as a carbon fiber papermaking substrate is provided, and molded without being laminated, and is carbonized to obtain a carbon sheet. However, when the carbon sheet is obtained by laminating prepregs different in amount of the impregnated resin composition, there is a case where a rapid change in average fluorine intensity occurs at the lamination interface, so that generated water is easily retained at the interface without being smoothly discharged, and therefore it is preferred that the carbon sheet be prepared from one prepreg because such a rapid change in average fluorine intensity does not occur. Preparation of the carbon sheet from one prepreg rather than laminating a plurality of prepregs facilitates reduction of the thickness of the resulting carbon sheet, and is therefore suitable for ensuring that the thickness is in the above-mentioned preferred range.

In the present invention, when the sum of the volumes of pores having a diameter in the range of 1 to 100 µm is 100%, the sum of the volumes of pores having a diameter in the range of 50 to 100 µm is 17 to 50%, water removal performance is particularly improved, and a high anti-flooding characteristic is exhibited, which is preferred. Pores having a diameter in the range of 50 to 100 µm has an important role in control of water and water vapor during electrical power generation. The ratio of large pores with a diameter in the above-mentioned range is also associated with uniformity of the carbon sheet with respect to formation unevenness or the like. When the sum of the volumes of pores having a diameter in the range of 1 to 100 µm is 100%, the sum of the volumes of pores having a diameter in the range of 50 to 100 µm is 17% or more, water removal performance is improved, so that flooding can be suppressed. When the volume ratio of pores with a diameter of 50 to 100 µm is 50% or less, a carbon sheet formed by papermaking or the like can be made free from formation unevenness or the like, and uniformly prepared, and therefore mechanical properties such as tensile strength can be improved.

In the carbon sheet of the present invention, the peak of the diameters of pores having a diameter in the range of 1 to 100 µm is preferably within the range of 30 to 50 µm, more preferably within 35 to 45 µm. When the peak diameter in pores having a diameter in the range of 1 to 100 µm is in the range of 30 to 50 µm, suppression of flooding and improvement of mechanical properties can be more effectively attained.

A method suitable for preparing the carbon sheet of the present invention will now be described in detail with a carbon paper, which includes a carbon fiber papermaking substrate as a porous material, as a representative example.

### <Preparation of Porous Material Including Carbon Fiber>

A porous material to be used for preparing a porous carbon sheet will be described. Preferably, the porous carbon sheet of the present invention has high gas diffusivity for allowing a gas supplied from a bipolar plate to be diffused into a catalyst layer and high water removal performance for discharging water generated by an electrochemical reaction to the bipolar plate, as well as high electrical conductivity for extracting generated electric current. Thus, for obtaining a porous carbon sheet, a porous material having electrical conductivity is preferably used. More specifically, as the porous material to be used for obtaining a porous carbon sheet, for example, a porous material including a carbon fiber, such as a carbon fiber papermaking substrate, a carbon fiber woven material or a felt-type carbon fiber nonwoven fabric, is preferably used. Among them, a carbon fiber papermaking substrate is preferably used as a porous material because it has excellent property of absorbing a change in dimension of an electrolyte membrane in a through-plane direction when the porous substrate is formed into a porous carbon sheet. Hereinafter, preparation of the porous material will be described with a carbon fiber papermaking substrate as a typical example.

Examples of the carbon fiber in the carbon sheet of the present invention and the porous material to be used for obtaining the carbon sheet include polyacrylonitrile (PAN)-based, pitch-based and rayon-based carbon fibers. Among them, PAN-based carbon fibers and pitch-based carbon fibers are preferably used because of their excellent mechanical strength.

In the carbon fiber in the carbon sheet of the present invention and the porous material to be used for obtaining the carbon sheet, the mean diameter of monofilaments (hereinafter, referred to as a carbon fiber diameter) is preferably within the range of 3 to 20 µm, more preferably within the range of 5 to 10 µm. When the carbon fiber diameter is 3 µm or more, more preferably 5 µm or more, the pore diameter becomes large, and the water removal performance is improved, so that flooding is easily suppressed. Meanwhile, when the carbon fiber diameter is 20 µm or less, more preferably 10 µm or less, thickness unevenness is reduced, so that the thickness of the carbon sheet is easily controlled to fall within a preferred range as described below. Here, the carbon fiber diameter is an average value determined by taking a photograph of the carbon fiber at a magnification of 1000 times, under a microscope such as a scanning electron microscope, randomly selecting 30 different monofilaments, and measuring their diameter. As the scanning electron microscope, S-4800 manufactured by Hitachi, Ltd. or its equivalent product can be used.

In the carbon fiber to be used in the present invention, the mean length of monofilaments (hereinafter, referred to as a carbon fiber length) is preferably within the range of 3 to 20 mm, more preferably within the range of 5 to 15 mm. When the carbon fiber length is 3 mm or more, more preferably 5 mm or more, the carbon sheet easily attains excellent mechanical strength, electrical conductivity and thermal conductivity. Meanwhile, when the carbon fiber length is 20 mm or less, more preferably 15 mm or less, dispersibility of the carbon fiber in papermaking is improved, so that a uniform carbon sheet can be easily obtained. A carbon fiber having the above-mentioned carbon fiber length can be obtained by a method of cutting a continuous carbon fiber into a desired length, or the like.

The mean length of monofilaments in the carbon fiber (carbon fiber length) is an average value determined by taking a photograph of the carbon fiber at a magnification of 50 times, under a microscope such as a scanning electron microscope, randomly selecting 30 different monofilaments, and measuring their length. As the scanning electron microscope, S-4800 from Hitachi, Ltd. or its equivalent product can be used.

The carbon fiber diameter and the carbon fiber length are usually measured by directly observing the carbon fiber for a carbon fiber to be a raw material, and can be measured by observing the carbon sheet.

The carbon fiber papermaking substrate formed by papermaking as one form of the porous material to be used for obtaining the carbon sheet is preferably in the form of a sheet in which a carbon fiber is randomly dispersed in a two-dimensional plane, in order to maintain the in-plane electrical conductivity and thermal conductivity to be isotropic when the papermaking substrate is formed into the carbon sheet. Papermaking of the carbon fiber in preparation of the carbon fiber papermaking substrate can be performed once, or performed multiple times in a laminated form.

In the present invention, the carbon fiber areal weight in the carbon fiber papermaking substrate is preferably within the range of 10 to 50 g/m², more preferably within the range of 15 to 35 g/m², further preferably within the range of 20 to 30 g/m². When the carbon fiber areal weight in the carbon fiber papermaking substrate is 10 g/m² or more, more preferably 15 g/m² or more, further preferably 20 g/m² or more, the carbon sheet obtained from the carbon fiber papermaking substrate easily attains excellent mechanical strength. When the carbon fiber areal weight in the carbon fiber papermaking substrate is 50 g/m² or less, more preferably 35 g/m² or less, further preferably 30 g/m² or less, the carbon sheet obtained from the carbon fiber papermaking substrate easily attains excellent gas diffusivity in an in-plane direction and water removal performance. In cases where a plurality of papermaking substrates are laminated to obtain a carbon fiber papermaking substrate, it is preferred that the carbon fiber areal weight in the carbon fiber papermaking substrate after the lamination be in the range of 10 to 50 g/m².

Here, the carbon fiber areal weight in the carbon sheet can be determined by retaining a carbon fiber papermaking substrate cut into a 10-cm square under a nitrogen atmosphere in an electric furnace at a temperature of 450°C for 15 minutes and then dividing the mass of the residue obtained by removal of organic matters by the area of the carbon fiber papermaking substrate (0.01 m²).

### <Impregnation of Resin Composition>

In preparation of the carbon sheet of the present invention, a porous material containing a carbon fiber, such as a carbon fiber papermaking substrate, is impregnated with a resin composition that serves as a binding material.

In the present invention, the binding material in the carbon sheet represents components other than the carbon fiber in the carbon sheet, and mainly serves to bind carbon fibers. Examples of the material that serves to bind carbon fibers include resin compositions to be impregnated into the porous material, and carbides thereof. Hereinbelow, a carbon fiber-containing porous material impregnated with a resin composition that serves as a binding material may be described as a "prepreg".

As a method for impregnating a carbon fiber-containing porous material with a resin composition that serves as a binding material, a method of dipping a porous material into a resin composition containing a solvent, a method of coating a porous material with a resin composition containing a solvent, a method of transferring to a porous material a layer composed of a resin composition and included in a film, or the like is preferably employed. Among them, a method of dipping a porous material into a resin composition containing solvent is preferably employed because of its excellent productivity.

In the carbon sheet of the present invention, the average fluorine intensity of the layer decreases in the order of the layer X, the layer Y and the layer Z. The method for adjusting the average fluorine intensity of each layer is not particularly limited, but a hydrophobic treatment as described below is preferably employed.

Hereinafter, a case where the hydrophobic treatment is used will be described. When the hydrophobic treatment is performed using a hydrophobic material containing fluorine atoms, the hydrophobic material tends to be adhered in a larger amount to the surface of a binding material, particularly the surface of a binding material in which a resin component is carbonized, than to the surface of a carbon fiber. Thus, a carbon sheet in which the average fluorine intensity decreases in the order of the layer X, the layer Y and the layer Z can be obtained by impregnating a resin composition into a porous material in such a manner that the amount of the resin composition decreases in the order of the layer X, the layer Y and the layer Z. The method for controlling the distribution of a resin composition may be a method in which by impregnating a resin composition as a binding material into a carbon fiber papermaking substrate uniformly as a whole by dipping or the like to obtain a prepreg, and then removing an excess amount of the adhered resin composition from one surface before drying, the amount of the resin composition or a carbide thereof in a through-plane direction in the carbon sheet is controlled and distributed.

As one example of the method for controlling the resin composition and the average fluorine intensity in each layer, mention is made of the following method. By dipping a carbon fiber papermaking substrate into a resin composition-containing solution to obtain a prepreg, and then suctioning the resin composition-containing solution from one surface before drying the prepreg, or pressing a squeeze roll against only one surface of the carbon fiber papermaking substrate, the loading amount in the vicinity of the surface Y can be made smaller than the loading amount in the vicinity of the surface X. Meanwhile, since a solvent in the resin composition is volatilized from the surface in a drying process, the resin composition may be distributed in a larger amount on the surface of the prepreg than in the prepreg. Resultantly, in the prepreg, the amount of the resin composition as a binding material can be changed in such a manner as to decrease in the order of the layer X, the layer Y and the layer Z, and by carbonizing the prepreg and subjecting the prepreg to a hydrophobic treatment, the average fluorine intensity can be controlled to decrease in the order of the layer X, the layer Y and the layer Z.

As another example of the method for controlling the resin composition and the average fluorine intensity in each layer, mention may be made of a method in which by dipping a carbon fiber papermaking substrate into a resin composition-containing solution to obtain a prepreg, then additionally coating only one surface of the carbon fiber papermaking substrate with the resin composition by a spray or a gravure roll, and carbonizing the prepreg and subjecting the prepreg to a hydrophobic treatment, the average fluorine intensity is controlled to decrease in the order of the layer X, the layer Y and the layer Z.

### <Resin Composition to Be Used in Preparation of Prepreg>

The resin composition to be used in preparation of a prepreg is a resin component to which a solvent or the like is added as required. Here, the term "resin component" refers to a component which contains a resin such as a thermosetting resin or a thermoplastic resin and, as required, an additive(s) such as a carbon powder and a surfactant.

The carbonization yield of the resin component contained in the resin composition is preferably 40% by mass or more. When the carbonization yield is 40% by mass or more, the carbon sheet easily attains excellent mechanical properties, electrical conductivity and thermal conductivity. The carbonization yield of the resin component contained in the resin composition is not particularly limited, and is normally about 60% by mass.

The resin constituting the resin component in the resin composition includes thermosetting resins such as phenolic resins, epoxy resins, melamine resins and furan resins, and the like. Among them, a phenolic resin is preferably used because of its high carbonization yield.

Further, as an additive to be added as a resin component in the resin composition as required, a carbon powder can be used for the purpose of improving the mechanical properties, electrical conductivity and thermal conductivity of the carbon sheet. Here, for the carbon powder, a carbon black such as furnace black, acetylene black, lamp black or thermal black, a graphite such as scaly graphite, scale-like graphite, earthy graphite, artificial graphite, expanded graphite or flaky graphite, a carbon nanotube, a carbon nanofiber, a milled fiber of carbon fiber or the like can be used.

As the resin composition, the resin component can be used as it is, or the resin component may contain various kinds of solvents as required for the purpose of improving impregnation property into a porous material such as a carbon fiber papermaking substrate. Here, as the solvent, methanol, ethanol, isopropyl alcohol or the like can be used.

It is preferred that the resin composition be in a liquid form under a condition of 25°C and 0.1 MPa. When the resin composition is in a liquid form, it has excellent impregnation property into a porous material such as a papermaking substrate, so that the resulting carbon sheet attains excellent mechanical properties, electrical conductivity and thermal conductivity.

In impregnation of the resin composition, the porous material is impregnated with the resin composition in such a manner that the amount of the resin component is preferably 30 to 400 parts by mass, more preferably 50 to 300 parts by mass based on 100 parts by mass of the carbon fiber in the prepreg. When the amount of the impregnated resin composition based on 100 parts by mass of the carbon fiber in the prepreg is 30 parts by mass or more, more preferably 50 parts by mass or more, the carbon sheet has excellent mechanical properties, electrical conductivity and thermal conductivity. Meanwhile, when the amount of the impregnated resin composition based on 100 parts by mass of the carbon fiber in the prepreg is 400 parts by mass or less, more preferably 300 parts by mass or less, the carbon sheet has excellent gas diffusivity.

### <Lamination and Annealing>

In the present invention, after a prepreg in which a porous material such as a carbon fiber papermaking substrate is impregnated with a resin composition is formed, the prepreg can be laminated and/or annealed prior to carbonization.

In the present invention, a plurality of prepregs can be laminated in order to allow the carbon sheet to have a prescribed thickness. In this case, a plurality of prepregs having the same properties can be laminated, or a plurality of prepregs having different properties can be laminated. Specifically, it is possible to laminate a plurality of prepregs that are different in terms of the carbon fiber diameter or carbon fiber length, the areal weight of the carbon fiber in a porous material such as a carbon fiber papermaking substrate to be used in preparation of the prepreg, the amount of the impregnated resin component, and the like.

Meanwhile, lamination of a plurality of prepregs causes formation of a discontinuous surface in a through-plane direction, so that water removal performance may be deteriorated, and therefore in the present invention, it is desirable that rather than laminating a plurality of porous materials such as carbon fiber papermaking substrates, only one porous material be subjected to annealing.

In order to increase viscosity of the resin composition in the prepreg or cure the resin composition, the prepreg can be subjected to annealing. As an annealing method, a method of blowing hot air against the prepreg, a method of heating the prepreg by sandwiching it between hot platens of a press apparatus, a method of heating the prepreg by sandwiching it between continuous belts or the like can be employed.

### <Carbonization>

In the present invention, a porous material such as a carbon fiber paper making substrate is impregnated with a resin composition to obtain a prepreg, and the prepreg is then baked in an inert atmosphere for carbonizing the resin component. For this baking, a batch-type heating furnace or a continuous heating furnace can be used. Further, the inert atmosphere can be obtained by allowing an inert gas such as nitrogen gas or argon gas to flow in the furnace.

The highest temperature in the baking is preferably within the range of 1300 to 3000°C, more preferably within the range of 1700 to 3000°C, and further preferably within the range of 1900 to 3000°C. When the highest temperature is 1300°C or more, carbonization of the resin component in the prepreg is facilitated, so that the carbon sheet attains excellent electrical conductivity and thermal conductivity. Meanwhile, when the highest temperature is 3000°C or less, the operating cost of the heating furnace is reduced.

### <Hydrophobic Treatment>

In the present invention, it is preferred that the baked carbon fiber be subjected to a hydrophobic treatment for the purpose of improving water removal performance. The hydrophobic treatment can be performed by, for example, coating the baked carbon fiber with a hydrophobic material and subsequently annealing the coated baked carbon fiber. When the hydrophobic treatment is performed using a hydrophobic material, the carbon sheet contains the hydrophobic material as a binding material.

In the carbon sheet of the present invention, the sliding angle of water at the surface Y is preferably 40 degrees or less. By forming a microporous layer on the surface X side of the carbon sheet of the present invention, the gas diffusion electrode substrate of the present invention can be obtained. When the gas diffusion electrode substrate is used as a fuel cell, the surface Y is on the bipolar plate side. When the sliding angle at the surface Y is 40 degrees or less, generated water flowing through the bipolar plate flow channel is smoothly discharged without depositing on the surface Y, so that the anti-flooding characteristic can be improved. The sliding angle at the surface Y is preferably as small as possible, and the best water removal performance can be achieved at a sliding angle of 1 degree.

As a method for performing control so that the sliding angle at the surface Y is 40 degrees or less, mention is made of a method in which during annealing in a hydrophobic treatment step, a hydrophobic material is melted to reduce its viscosity. When the hydrophobic material is melted, the hydrophobic material uniformly spreads over the carbon fiber surface in the carbon sheet, and thus the sliding angle of water can be made not more than 40 degrees, so that the anti-flooding characteristic can be improved. Here, the sliding angle of water at the surface Y means a sliding angle determined by making a measurement from the surface Y of the carbon sheet.

The melting point of the hydrophobic material to be used in the hydrophobic treatment is preferably within the range of 200 to 320°C, more preferably within the range of 230 to 310°C, and further preferably within the range of 250 to 300°C. When the melting point of the hydrophobic material is 320°C or less, more preferably 310°C or less, further preferably 300°C or less, the hydrophobic material is easily melted to uniformly spread the hydrophobic over the carbon fiber surface in the carbon sheet in annealing in the hydrophobic treatment, so that a carbon sheet having high hydrophobicity can be obtained, and the anti-flooding characteristic can be improved. When the melting point of the hydrophobic material is 200°C or more, more preferably 230°C or more, further preferably 250°C or more, the hydrophobic material is hardly thermally decomposed, so that a carbon sheet having high hydrophobicity can be obtained, and the anti-flooding characteristic can be improved.

As a type of the hydrophobic material to be used in the hydrophobic treatment, a fluorine-based polymer is preferably used because of its excellent corrosion resistance. Examples of the fluorine-based polymer include polytetrafluoroethylene (PTFE), tetrafluoroethylene-hexafluoropropylene copolymers (FEP) and/or tetrafluoroethylene-perfluoroalkylvinyl ether copolymers (PFA). Among them, tetrafluoroethylene-hexafluoropropylene copolymers (FEP) and/or tetrafluoroethylene-perfluoroalkylvinyl ether copolymers (PFA) are more preferably used. When a tetrafluoroethylene-hexafluoropropylene copolymer (FEP) and/or a tetrafluoroethylene-perfluoroalkylvinyl ether copolymer (PFA) are used, the hydrophobic material is easily melted to uniformly spread over the carbon fiber surface in the carbon sheet, so that a carbon sheet having high hydrophobicity can be obtained. Since the hydrophobic material uniformly spreads over the carbon fiber surface in the carbon sheet, the hydrophobic material on the carbon fiber surface is thinned, and therefore the contact resistance between the bipolar plate and the carbon sheet is reduced, which is preferred. By using the above-mentioned material as a hydrophobic material, the sliding angle of water at the surface Y can be made equal to or less than 40 degrees, and therefore the water removal performance of the carbon sheet can be considerably enhanced, so that accumulation of water in the carbon sheet subjected to the hydrophobic treatment can be reduced, and therefore gas diffusivity can be considerably improved. Thus, fuel cell performance is considerably improved.

The loading amount of the hydrophobic material in the hydrophobic treatment is preferably 1 to 50 parts by mass, more preferably 2 to 40 parts by mass based on 100 parts by mass of the baked carbon fiber. When the loading amount of the hydrophobic material is 1 part by mass or more, more preferably 2 parts by mass or more based on 100 parts by mass of the baked carbon fiber, the carbon sheet has excellent water removal performance. Meanwhile, when the loading amount of the hydrophobic material is 50 parts by mass or less, more preferably 40 parts by mass or less based on 100 parts by mass of the baked carbon fiber, the carbon sheet has excellent electrical conductivity.

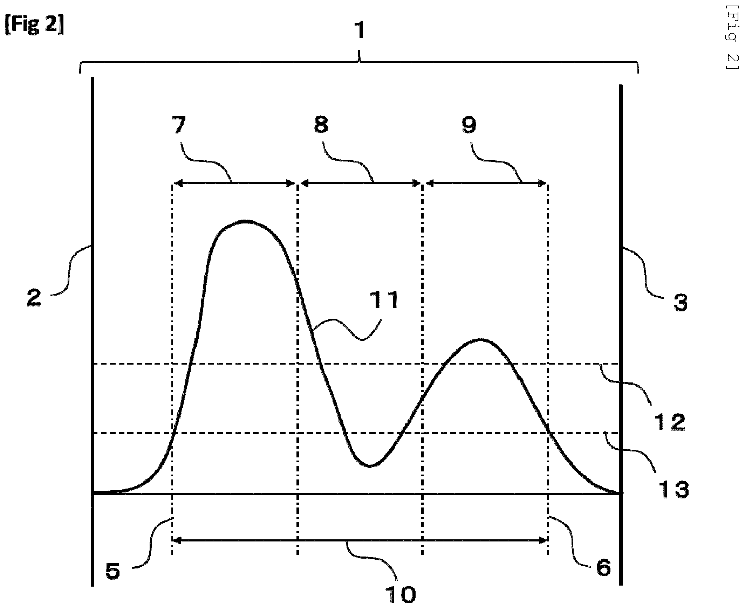

In the present invention, the fluorine intensity of the carbon sheet is determined in the following manner. This will be described below with reference to Fig. 2. First, one surface and the other surface of the carbon sheet (1) are provisionally defined as a surface X(2) and a surface Y(3), respectively, and randomly 50 samples for observation of a through-plane-direction cross-section of the carbon sheet (1) are then prepared using a sharp-edged tool. Using a scanning electron microscope (SEM)-energy dispersive X-ray analyzer (EDX), the cross sections of the 50 samples of the carbon sheet (1) are line-scanned in the through-plane direction of the carbon sheet (1) to determine a distribution (11) of the fluorine intensity (signal intensity of fluorine). The fluorine intensity is measured under the conditions of an acceleration voltage of 7 kV, a magnification of 300 times and a line width of 20 µm. A value (13) of 50% of an average value (12) of fluorine intensities measured along a line in the through-plane direction of the carbon sheet (1), which extends from one surface to the other surface of the carbon sheet (1), is determined, and among layers obtained by dividing the carbon sheet (1) in the through-plane direction into three equal parts within a section (10) extending from a surface (surface XX(5)) having a 50% average fluorine intensity, which is closest to the provisionally defined surface X(2), to a surface (surface YY(6)) having a 50% average fluorine intensity, which is closest to the provisionally defined surface Y(3), a layer including the surface XX(5) is provisionally defined as a layer X(7), a layer including the surface YY(6) is provisionally defined as a layer Y(9), and a middle layer sandwiched between the layer X(7) and the layer Y(9) is defined as a layer Z(8).

The average value of the fluorine intensity in the layer X of each of the 50 carbon sheets is calculated to obtain an "average value of fluorine intensity in layer X" for 50 carbon sheets. The average value of the obtained "average value of fluorine intensity in layer X" for 50 carbon sheets is defined as an average fluorine intensity of the layer X. For the layers Y and Z, the average fluorine intensity is calculated by the same method as described above. A layer having a larger average fluorine intensity and a layer having a smaller average fluorine intensity are defined as the layer X and the layer Y, respectively, of the provisionally defined layers X and Y, and a surface on the layer X side of the carbon sheet and a surface on the layer Y side of the carbon sheet are defined as the surface X and the surface Y, respectively.

In the present invention, the baked carbon fiber corresponds to the "carbon sheet". As described above, the baked carbon fiber is subjected to a hydrophobic treatment as necessary, and in the present invention, the baked carbon fiber subjected to a hydrophobic treatment also corresponds to the "carbon sheet". Of course, the baked carbon fiber that is not subjected to a hydrophobic treatment corresponds to the "carbon sheet".

### [Gas Diffusion Electrode Substrate]

The gas diffusion electrode substrate of the present invention will now be described.

The gas diffusion electrode substrate of the present invention can be prepared by forming the below-described microporous layer on the carbon sheet.

### <Formation of Microporous Layer>

The carbon sheet of the present invention can be used as a gas diffusion electrode substrate by forming the microporous layer on one surface of the carbon sheet. Preferably, the gas diffusion electrode substrate of the present invention has a microporous layer on the surface X side of the carbon sheet. When the gas diffusion electrode substrate has a microporous layer on the surface X side, a filler-containing coating solution for forming the microporous layer is more hardly penetrate into the carbon sheet, seepage of the filler-containing coating solution to the surface Y is further suppressed. Resultantly, the gas diffusivity of the carbon sheet in the through-plane direction is further improved, and the fuel cell performance of the fuel cell is further improved. The filler-containing coating solution more hardly penetrate into the carbon sheet, and the microporous layer is formed in a more preferred thickness on the surface layer of the carbon sheet, so that drying of the electrolyte membrane is further suppressed due to back-diffusion of generated water.

The areal weight of the microporous layer is not particularly limited, but it is preferably within the range of 10 to 35 g/m², more preferably 14 to 30 g/m², further preferably 16 to 25 g/m².

When the areal weight of the microporous layer is 10 g/m² or more, more preferably 14 g/m² or more, further preferably 16 g/m² or more, one surface of the carbon sheet can be covered with the microporous layer, and back-diffusion of generated water is further promoted, so that dry-out of the electrolyte membrane can be further suppressed. When the areal weight of the microporous layer is 35 g/m² or less, more preferably 30 g/m² or less, further preferably 25 g/m² or less, water removal performance is further improved, so that flooding can be further suppressed.

Preferably, the microporous layer contains a filler. As the filler, a carbon powder is preferred. Examples of the carbon powder include carbon blacks such as furnace black, acetylene black, lamp black and thermal black, graphites such as scaly graphite, scale-like graphite, earthy graphite, artificial graphite, expanded graphite and flaky graphite, carbon nanotubes, carbon nanofibers and milled fibers of carbon fiber. Among them, for the carbon powder, a carbon black is more preferably used, and acetylene black is most preferably used because the content of impurities is low.

In the present invention, a porous material containing linear carbon and a hydrophobic material can also be used in the microporous layer from the viewpoint of improving electrical conductivity and water removal performance.

In the present invention, the microporous layer contains a carbon powder, the carbon powder is that of linear carbon, and the aspect ratio of the linear carbon is 30 to 5000, whereby penetration of a filler-containing coating solution as a precursor of the microporous layer into the carbon sheet can be properly suppressed to improve gas diffusivity in an in-plane direction and water removal performance, so that flooding can be suppressed, and further, a microporous layer having a sufficient thickness is formed on a surface layer of the carbon sheet to back-diffusion of generated water is promoted, so that drying of the electrolyte membrane can be suppressed.

In the present invention, it is preferred that the microporous layer contain water removal material from the viewpoint of promoting removal of water. In particular, a fluorine-based polymer is preferably used as the hydrophobic material because of its excellent corrosion resistance. The fluorine-based polymer includes polytetrafluoroethylene (PTFE), tetrafluoroethylene-hexafluoro propylene copolymers (FEP), tetrafluoroethylene-perfluoroalkylvinyl ether copolymers (PFA), and the like.

The filler-containing coating solution may contain a dispersion medium such as water or an organic solvent, and may contain a dispersant such as a surfactant. The dispersion medium is preferably water, and a nonionic surfactant is preferably used as the dispersant. The filler-containing coating solution may contain a filler such as a variety of carbon powders and a hydrophobic material as described above.

The microporous layer can be formed by coating one surface of the carbon sheet, preferably the surface X of the carbon sheet, with the coating solution (filler-containing coating solution) containing the filler. When the microporous layer is formed on both surfaces of the carbon sheet, the microporous layer having a pore diameter smaller than that of the carbon sheet hinders discharge of water and a diffusion of a gas from the gas diffusion electrode substrate to the bipolar plate, and therefore it is preferred that the microporous layer be formed on one surface of the carbon sheet.

Preferably, the microporous layer is formed by applying the filler-containing coating solution multiple times. When the filler-containing coating solution is applied multiple times, the average fluorine intensity of the layer X increases, so that the difference in average fluorine intensity between the layer X and the layer Z increases, and therefore generated water produced due to electrical power generation easily moves quickly from the layer X to the layer Z. Resultantly, the rate at which generated water is discharged from the layer X is remarkably increased, so that fuel cell performance is easily improved.

Coating of the carbon sheet with the filler-containing coating solution can be performed using a variety of commercially available coating apparatuses. As a coating system, a coating system such as screen printing, rotary screen printing, spraying, intaglio printing, gravure printing, die coating, bar coating or blade coating can be employed. The coating methods exemplified above are presented for the illustration purpose only, and the coating method is not necessarily restricted thereto.

It is preferred to dry the coating solution at a temperature of 80 to 180°C after coating the carbon sheet with the filler-containing coating solution. That is, the coated matter is placed in a dryer whose temperature is set at 80 to 180°C and dried in the range of 5 to 30 minutes. The drying air volume may be appropriately decided, but rapid drying may induce micro cracks in the surface. It is preferred that after the coated matter is dried, the coated matter be placed in a muffle furnace, a baking furnace or a high-temperature drying furnace, and heated at preferably at a temperature of 300 to 380°C for 5 to 20 minutes to melt the hydrophobic material, so that fillers such as carbon powders are bonded together into a binder to form the microporous layer.

### [Membrane Electrode Assembly]

In the present invention, a membrane electrode assembly can be formed by binding the above-described gas diffusion electrode substrate on at least one surface of a solid polymer electrolyte membrane having a catalyst layer on both surfaces. At this time, when the microporous layer of the gas diffusion electrode substrate is arranged on the catalyst layer side, back-diffusion of the generated water is more likely to occur, and also the contact area between the catalyst layer and the gas diffusion electrode substrate is increased, so that the contact electrical resistance can be reduced.

### [Fuel Cell]

The fuel cell of the present invention is a fuel cell including the gas diffusion electrode substrate of the present invention, i.e. a fuel cell having bipolar plates on both sides of the membrane electrode assembly described above. That is, the fuel cell is constituted by arranging bipolar plates on both sides of the membrane electrode assembly described above. Usually, a polymer electrolyte fuel cell is constituted by laminating a plurality of such membrane electrode assemblies that are sandwiched by bipolar plates from both sides via a gasket. The catalyst layer is composed of a layer containing a solid polymer electrolyte and a carbon material of carbon-supported catalyst. As the catalyst, platinum is usually used. In a fuel cell in which a carbon monoxide-containing reformed gas is supplied to the anode side, it is preferred to use platinum and ruthenium as catalysts of the anode side. As the solid polymer electrolyte, it is preferred to use a perfluorosulfonic acid-based polymer material having high protonic conductivity, oxidation resistance, and heat resistance. The constitutions themselves of the above-mentioned fuel cell unit and fuel cell are well known.

### EXAMPLES

The carbon sheet and the gas diffusion electrode substrate of the present invention will now be described in detail by ways of examples. The materials, and the methods for producing a carbon sheet and a gas diffusion electrode substrate, and the battery performance evaluation method of fuel cell that are used in the examples are described below.

### <Preparation of Carbon Sheet>

### • Preparation of 220 µm-thick carbon sheet

Polyacrylonitrile-based carbon fiber "TORAYCA" (registered trademark) T300 having a carbon fiber diameter of 7 µm and a carbon fiber length of 12 mm (manufactured by Toray Industries, Inc.) was dispersed in water to continuously make a paper by a wet papermaking method. Further, a 10% by mass aqueous solution of polyvinyl alcohol as a binder was coated on the paper and then dried to prepare a carbon fiber papermaking substrate having a carbon fiber areal weight of 44.0 g/m². The loading amount of the polyvinyl alcohol was 22 parts by mass with respect to 100 parts by mass of the carbon fiber papermaking substrate.

Next, using a resin obtained by mixing a resol type phenolic resin and a novolak type phenolic resin at a 1 : 1 mass ratio as a thermosetting resin, scaly graphite (mean particle size 5 µm) as a carbon powder and methanol as a solvent, the materials were mixed at a ratio of thermosetting resin/carbon powder/solvent = 10 parts by mass/5 parts by mass/85 parts by mass, and the resulting mixture was stirred for 1 minute using an ultrasonic dispersion apparatus to obtain a uniformly dispersed resin composition.

Next, the papermaking substrate was cut into a size of 15 cm × 12.5 cm and dipped into the resin composition filled in an aluminum tray, and was then sandwiched between two horizontally arranged rolls, and squeezed. Here, the loading amount of the resin component based on the amount of the carbon fiber papermaking substrate was adjusted by changing the clearance between the two horizontally arranged rolls. One of the two rolls was a smooth metallic roll having a structure allowing an excess resin to be removed by a doctor blade, and as the other roll, a roll provided with irregularities and called a gravure roll in terms of a configuration was used. The carbon fiber papermaking substrate was sandwiched by the metallic roll on the one surface side and the gravure roll on the other surface side, and the resin composition impregnation liquid was squeezed to provide a difference in loading amount of the resin component between the one surface side and the other surface side of the carbon fiber papermaking substrate. The carbon fiber papermaking substrate was impregnated with the resin composition, and then heated and dried at a temperature of 100°C for 5 minutes to prepare a prepreg. Next, the prepreg was annealed at a temperature of 180°C for 5 minutes while being pressed by a pressing machine with flat plates. In pressing of the prepreg, the space between the upper and lower press plates was adjusted by arranging a spacer in the pressing machine with flat plates.

A substrate obtained by annealing the prepreg was introduced into a heating furnace having the highest temperature of 2400°C, in which a nitrogen gas atmosphere was maintained, to obtain a 220 µm-thick carbon sheet composed of a baked carbon fiber.

### • Preparation of 150 µm-thick carbon sheet

A 150 µm-thick carbon sheet was prepared in accordance with the method described in the above-mentioned method for preparation of the 220 µm-thick carbon sheet, except that the areal weight of the carbon fiber was 30.0 g/m², and the space between the upper and lower press plates was adjusted in annealing by the pressing machine with flat plates.

### • Preparation of 100 µm-thick carbon sheet

A 100 µm-thick carbon sheet was prepared in accordance with the method described in the above-mentioned method for preparation of the 220 µm-thick carbon sheet, except that the areal weight of the carbon fiber was 22.0 g/m², and the space between the upper and lower press plates was adjusted in annealing by the pressing machine with flat plates.

### <Hydrophobic Treatment>

The carbon sheet prepared as described above was dipped into a water dispersion liquid of PTFE resin ("POLYFLON" (registered trademark) PTFE Dispersion D-1E (manufactured by DAIKIN INDUSTRIES, Ltd.)) or a water dispersion liquid of FEP resin ("NEOFLON" (registered trademark) FEP Dispersion ND-110 (manufactured by DAIKIN INDUSTRIES, Ltd.)) as a hydrophobic material to impregnate the baked carbon fiber with the hydrophobic material. Thereafter, the carbon sheet was heated and dried in a drying furnace at a temperature of 100°C for 5 minutes to prepare a carbon sheet subjected to a hydrophobic treatment. In the drying, the carbon sheet was vertically arranged, and the vertical direction was changed every 1 minute. The water dispersion liquid of the hydrophobic material was diluted to an appropriate concentration so as to add 5 parts by mass of the hydrophobic material to the 95 parts by mass of the carbon sheet in terms of an amount after drying.

### <Preparation of Gas Diffusion Electrode Substrate>

### <Materials>

- Carbon powder A: acetylene black "DENKA BLACK" (registered trademark) manufactured by Denka Company Limited)
- Carbon powder B: linear carbon: vapor phase growth carbon fiber "VGCF" (registered trademark) (manufactured by SHOWA DENKO K.K.), aspect ratio: 70
- Material C: hydrophobic material: PTFE resin ("POLYFLON" (registered trademark) PTFE Dispersion D-1E (manufactured by DAIKIN INDUSTRIES, Ltd.)) that is a water dispersion liquid containing 60 parts by mass of PTFE resin
- Material D: surfactant "TRITON" (registered trademark) X-100 (manufactured by Nacalai Tesque)

A filler-containing coating solution was prepared by mixing the above-mentioned materials using a disperser. One surface of the carbon sheet subjected to a hydrophobic treatment was coated with the filler-containing coating solution in a planar form using a slit die coater, and heating was then performed at a temperature of 120°C for 10 minutes, and then at a temperature of 380°C for 10 minutes. In this way, a microporous layer was formed on the carbon sheet subjected to a hydrophobic treatment, so that a gas diffusion electrode substrate was prepared. The filler-containing coating solutions used here are filler-containing coating solutions prepared using a carbon powder, a hydrophobic material, a surfactant and purified water and adjusted so as to have compositions of the filler-containing coating solutions with the addition amounts described in terms of parts by mass as shown in the tables. The addition amounts of the material C (PTFE resin) shown in the tables represent the addition amount of PTFE resin itself rather than the addition amounts of the water dispersion liquid of PTFE resin.

### <Evaluation of Fuel Cell Performance of Polymer Electrolyte Fuel Cell>

A catalyst paste was prepared by sequentially adding 1.00 g of a carbon material of carbon-supported platinum catalyst (manufactured by Tanaka Kikinzoku Kogyo K.K., platinum supporting amount: 50% by mass), 1.00 g of purified water, 8.00 g of "Nafion" (registered trademark) solution (manufactured by Aldrich, "Nafion" (registered trademark), 5.0% by mass) and 18.00 g of isopropyl alcohol (manufactured by Nacalai Tesque).

Then, a "NAFLON" (registered trademark) PTFE tape "TOMBO" (registered trademark) No. 9001 (manufactured by NICHIAS Corporation) which was cut into a size of 5 cm × 5 cm was coated with the obtained catalyst paste using a spray and dried at ordinary temperature to prepare a PTFE sheet equipped with a catalyst layer having a platinum amount of 0.3 mg/cm². Subsequently, a solid polymer electrolyte membrane, "Nafion" (registered trademark) NRE-211CS (manufactured by DuPont) which was cut into a size of 8 cm × 8 cm was sandwiched with two catalyst layer-equipped PTFE sheets. The resultant was pressed at a temperature of 130°C for 5 minutes while pressurizing at 5 MPa using a pressing machine with flat plates, thereby transferring the respective catalyst layers onto the solid polymer electrolyte membrane. After pressing, the PTFE sheets were removed to prepare a catalyst layer-equipped solid polymer electrolyte membrane.

Next, the obtained catalyst layer-equipped solid polymer electrolyte membrane was sandwiched with two gas diffusion electrode substrates cut into a size of 5 cm × 5 cm, and the resultant was pressed at a temperature of 130°C for 5 minutes while pressurizing at 3 MPa using a pressing machine with flat plates, thereby preparing a membrane electrode assembly. It is noted here that the gas diffusion electrode substrate was arranged such that the surface having the microporous layer was in contact with the catalyst layer.

The obtained membrane electrode assembly was incorporated into a fuel cell evaluation unit cell to measure the voltage when the current density was changed. Here, as a bipolar plate, a serpentine-type bipolar plate having one flow channel of 1.0 mm in each of channel width, channel depth and rib width was used. Further, the evaluation was carried out with non-pressurized hydrogen and non-pressurized air being supplied to the anode side and the cathode side, respectively.

For examining the anti-flooding characteristic, hydrogen and air were humidified using a humidification pot whose temperature was set at 40°C. The humidity at this time was 100%. The utilization ratios of hydrogen and atmospheric oxygen were set at 70 mol% and 40 mol%, respectively. The output voltage at a current density of 1.5 A/cm² was measured, and used as an index of the anti-flooding characteristic.

### <Measurement of Areal Weight>

The areal weights of the carbon sheet and the gas diffusion electrode substrate were determined by the mass of a sample cut into a 10-cm square by the area (0.01 m²) of the sample.

### <Measurement of Thickness>

A carbon sheet and a gas diffusion electrode substrate were placed on a smooth surface plate, and a difference in height between the case of presence of a measurement object and the case of absence of the measurement object was measured in a state in which a pressure of 0.15 MPa was applied. Samples were taken at 10 different parts, measured values of the difference in height were averaged, and the average thus obtained was defined as a thickness.

### <Measurement of Sliding Angle>

The sliding angle of the carbon sheet subjected to a hydrophobic treatment was determined by a sliding method using an automated contact angle meter. As the apparatus, an automated contact angle meter DM-501 manufactured by Kyowa Interface Science Co., Ltd. was used. The carbon sheet subjected to a hydrophobic treatment was fixed on an apparatus stage with the surface Y set on the upper side (measurement side), 10 µL of a droplet of ion-exchanged water was added to the surface Y of the carbon sheet, the carbon sheet was left standing for 1 second, and then inclined together with the apparatus stage, and the inclination angle at the time when the droplet started to slide down along the surface of the carbon sheet.

### <Measurement of Melting Point of Hydrophobic Material>

In the present invention, the melting point of the hydrophobic material was measured by differential scanning calorimetry. Using DSC6220 manufactured by Seiko Instruments Inc. (SII) as the apparatus, the temperature was changed from 30°C to 400°C at a heating rate of 2°C/min in nitrogen. The endothermic and exothermic peaks at that time were observed, and the endothermic peak at a temperature of 150°C or more was defined as the melting point of the hydrophobic material.

### <Measurement of Fluorine Intensity>

The fluorine intensity of the carbon sheet was determined in the following manner. This will be described below with reference to Fig. 2. First, one surface and the other surface of the carbon sheet (1) were provisionally defined as a surface X(2) and a surface Y(3), respectively, and randomly 50 samples for observation of a through-plane-direction cross-section of the carbon sheet (1) were then prepared using a sharp-edged tool. Using a scanning electron microscope (SEM)-energy dispersive X-ray analyzer (EDX), the cross sections of the 50 samples of the carbon sheet (1) were line-scanned in the through-plane direction of the carbon sheet (1) to determine a distribution (11) of the fluorine intensity (signal intensity of fluorine). The fluorine intensity was measured under the conditions of an acceleration voltage of 7 kV, a magnification of 300 times and a line width of 20 µm. A value (13) of 50% of an average value (12) of fluorine intensities measured along a line in the through-plane direction of the carbon sheet (1), which extended from one surface to the other surface of the carbon sheet (1), was determined, and among layers obtained by dividing the carbon sheet (1) in the through-plane direction into three equal parts within a section (10) extending from a surface (surface XX(5)) having a 50% average fluorine intensity, which was closest to the provisionally defined surface X(2), to a surface (surface YY(6)) having a 50% average fluorine intensity, which was closest to the provisionally defined surface Y(3), a layer including the surface XX(5) was provisionally defined as a layer X(7), a layer including the surface YY(6) was provisionally defined as a layer Y(9), and a middle layer sandwiched between the layer X(7) and the layer Y(9) was defined as a layer Z(8).

The average value of the fluorine intensity in the layer X of each of the 50 carbon sheets was calculated to obtain an "average value of fluorine intensity in layer X" for 50 carbon sheets. The average value of the obtained "average value of fluorine intensity in layer X" for 50 carbon sheets was defined as an average fluorine intensity of the layer X. For the layers Y and Z, the average fluorine intensity was calculated by the same method as described above. A layer having a larger average fluorine intensity and a layer having a smaller average fluorine intensity were defined as the layer X and the layer Y, respectively, of the provisionally defined layers X and Y, and a surface on the layer X side of the carbon sheet and a surface on the layer Y side of the carbon sheet were defined as the surface X and the surface Y, respectively.

If the average fluorine intensity in the carbon sheet cannot be determined because a single carbon sheet is not available, the average fluorine intensity can be determined by the above-mentioned method using a sample for observation of a through-plane-direction cross-section of a carbon sheet in a gas diffusion electrode substrate or a carbon sheet in a membrane electrode assembly. Particularly, it is preferred to determine the average fluorine intensity by the above-mentioned method using a sample for observation of a thickness-direction cross-section of the carbon sheet in the gas diffusion electrode substrate.

Even when the hydrophobic treatment is performed in a discontinuous planar form, for example in the form of inside portions of a grid or in a dot form, the fluorine intensity can be determined by the above-mentioned method because in this method, the average is taken for randomly prepared 50 samples, and therefore the average fluorine intensity is averaged including that of a discontinuous portion.

As the scanning electron microscope, S-3500N manufactured by Hitachi, Ltd. was used, and as the energy dispersive X-ray analyzer, EX-370 manufactured by HORIBA, Ltd. was used.

### (Example 1)

In accordance with the methods described in <Preparation of Carbon Sheet>, <Hydrophobic Treatment> and <Preparation of Gas Diffusion Electrode Substrate>, a gas diffusion electrode substrate including a porous carbon sheet, in which the average fluorine intensity decreased in the order of a layer X, a layer Y and a layer Z, as shown in Table 1 was obtained.

As a result of evaluating the fuel cell performance of this gas diffusion electrode substrate, the anti-flooding characteristic was very good with the output voltage being 0.4 V or more. The results are shown in Table 1.

### (Example 2)

The same procedure as in Example 1 was carried out to obtain a carbon sheet and a gas diffusion electrode substrate with configurations as shown in Table 1.

As a result of evaluating the fuel cell performance of this gas diffusion electrode substrate, the anti-flooding characteristic was very good with the output voltage being 0.4 V or more. The results are shown in Table 1.

### (Example 3)

The same procedure as in Example 1 was carried out to obtain a carbon sheet and a gas diffusion electrode substrate with configurations as shown in Table 1.

As a result of evaluating the fuel cell performance of this gas diffusion electrode substrate, the anti-flooding characteristic was very good with the output voltage being 0.4 V or more. The results are shown in Table 1.

### (Example 4)

The same procedure as in Example 1 was carried out to obtain a carbon sheet and a gas diffusion electrode substrate with configurations as shown in Table 1. Here, a large amount of a binding material was removed from the layer Y to make a change so that the difference in average fluorine intensity between the layer X and the layer Y was larger than that in Example 2.

As a result of evaluating the fuel cell performance of this gas diffusion electrode substrate, the anti-flooding characteristic was very good with the output voltage being 0.4 V or more. This may be because the fluorine intensity of the layer X was larger than that of the layer Y, so that water removal performance was enhanced. The results are shown in Table 1.

### (Example 5)

The same procedure as in Example 1 was carried out to obtain a carbon sheet and a gas diffusion electrode substrate with configurations as shown in Table 1. Here, a change was made so that the loading amount of the resin composition as a whole was larger than that in Example 2.

As a result of evaluating the fuel cell performance of this gas diffusion electrode substrate, the anti-flooding characteristic was very good with the output voltage being 0.4 V or more. The results are shown in Table 1.

### (Example 6)

The same procedure as in Example 1 was carried out to obtain a carbon sheet and a gas diffusion electrode substrate with configurations as shown in Table 1. Here, the loading amount of the resin composition as a whole was increased, and also a large amount of a binding material was removed from the layer Y to make a change so that the difference in average fluorine intensity between the layer X and the layer Y was larger than that in Example 5.

As a result of evaluating the fuel cell performance of this gas diffusion electrode substrate, the output voltage for the anti-flooding characteristic was less than 0.4 V, but the anti-flooding characteristic was good with the output voltage being 0.35 V or more. The results are shown in Table 1.

### (Example 7)

The same procedure as in Example 1 was carried out to obtain a carbon sheet and a gas diffusion electrode substrate with configurations as shown in Table 1. Here, the type of the hydrophobic material used for the hydrophobic treatment of the carbon sheet was changed to a tetrafluoroethylene-hexafluoropropylene copolymer (FEP) so that the sliding angle at the surface Y was 40 degrees or less.

As a result of evaluating the fuel cell performance of this gas diffusion electrode substrate, the anti-flooding characteristic was very good with the output voltage being much larger than 0.4 V. The results are shown in Table 1.

**[Table 1]**

| | | Example 1 | Example 2 | Example 3 | Example 4 | Example 5 | Example 6 | Example 7 |
|---|---|---|---|---|---|---|---|---|
| Carbon sheet | Thickness [µm] | 220 | 150 | 100 | 150 | 150 | 150 | 150 |
| | Areal weight [g/m²] | 69 | 45 | 35 | 46 | 48 | 51 | 46 |
| | Resin used for hydrophobic treatment | PTFE | PTFE | PTFE | PTFE | PTFE | PTFE | FEP |
| | Ratio of average fluorine intensity (layer X/layer Y) | 1.45 | 1.45 | 1.45 | 2.03 | 7.50 | 8.50 | 1.45 |
| | Ratio of average fluorine intensity (layer Z/layer Y) | 0.40 | 0.40 | 0.40 | 0.60 | 0.75 | 0.85 | 0.40 |
| | Sliding angle (surface Y side) [degree] | 65 | 64 | 67 | 63 | 64 | 65 | 25 |
| | Melting point of hydrophobic material (DSC method) [degree] | 331 | 329 | 330 | 331 | 330 | 329 | 309 |
| Composition of filler-containing coating solution for microporous layer | Carbon powder A [parts by mass] | 7.0 | 7.0 | 7.0 | 7.0 | 7.0 | 7.0 | 7.0 |
| | Carbon powder B [parts by mass] | - | - | - | - | - | - | - |
| | Material C [parts by mass] | 2.5 | 2.5 | 2.5 | 2.5 | 2.5 | 2.5 | 2.5 |
| | Material D [parts by mass] | 14.0 | 14.0 | 14.0 | 14.0 | 14.0 | 14.0 | 14.0 |
| | Purified water [parts by mass] | 74.8 | 74.8 | 74.8 | 74.8 | 74.8 | 74.8 | 74.8 |
| Gas diffusion electrode substrate | Areal weight [g/m²] | 83 | 59 | 49 | 60 | 63 | 65 | 60 |
| | Thickness [µm] | 240 | 171 | 121 | 169 | 170 | 169 | 170 |
| Anti-flooding characteristic | Output voltage [V] | 0.40 | 0.43 | 0.44 | 0.45 | 0.41 | 0.35 | 0.46 |

### (Example 8)

The same procedure as in Example 1 was carried out to obtain a carbon sheet and a gas diffusion electrode substrate with configurations as shown in Table 2.

As a result of evaluating the fuel cell performance of this gas diffusion electrode substrate, the anti-flooding characteristic was very good with the output voltage being much larger than 0.4 V. The results are shown in Table 2.

### (Example 9)

A long fiber of polyacrylonitrile was subjected to a flameproofing treatment at a temperature of 200°C for 10 minutes, a nonwoven fabric was prepared by a water flow entanglement treatment, and roll pressing was performed. The long fiber was then introduced into a heating furnace at a temperature of 2000°C and subjected to a carbonization treatment to obtain a carbon sheet composed of a baked carbon fiber of a 150 µm-thick nonwoven fabric.

Next, the PTFE resin used in <Hydrophobic Treatment> as a hydrophobic material also serving as a binding material and the carbon powder A used in <Preparation of Gas Diffusion Electrode Substrate> were mixed at a solid mass ratio of 1 : 1 to prepare a water dispersion liquid of a hydrophobic material (the concentration of the water dispersion liquid of a hydrophobic material was adjusted so that 5 parts by mass of the hydrophobic material would be added to 95 parts by mass of the carbon sheet after drying). Next, the carbon sheet composed of a baked carbon fiber as a nonwoven fabric was dipped into the water dispersion liquid of a hydrophobic material which was filled into an aluminum tray, and the carbon sheet was sandwiched between two horizontally arranged rolls (one of the two rolls is a smooth metallic roll having a doctor blade, and the other roll is a gravure roll provided with irregularities) with a certain clearance provided therebetween, and was squeezed, so that there was a difference between the loading amounts of the hydrophobic material on one surface and the other surface of the carbon sheet. Thereafter, the carbon sheet was heated and dried at a temperature of 380°C for 10 minutes. In this way, a carbon sheet as shown in Fig. 2, which was subjected to a hydrophobic treatment and in which the average fluorine intensity decreased in the order of a layer X, a layer Y and a layer Z, was prepared.

Subsequently, in accordance with the method described in <Preparation of Gas Diffusion Electrode Substrate>, a gas diffusion electrode substrate with a configuration as shown in Table 2 was obtained.

As a result of evaluating the fuel cell performance of this gas diffusion electrode substrate, the anti-flooding characteristic was very good with the output voltage being much larger than 0.4 V. The results are shown in Table 2.

### (Example 10)

The same procedure as in Example 1 was carried out to obtain a carbon sheet and a gas diffusion electrode substrate with configurations as shown in Table 2. Here, a small amount of a binding material was removed from the layer Y to make a change so that the difference in average fluorine intensity between the layer X and the layer Y was smaller than that in Example 2.

As a result of evaluating the fuel cell performance of this gas diffusion electrode substrate, the output voltage for the anti-flooding characteristic was less than 0.4 V, but the anti-flooding characteristic was good with the output voltage being 0.35 V or more. The results are shown in Table 2.

### (Comparative Example 1)

Except that two metallic rolls of the same shape were used in the step of sandwiching the carbon fiber papermaking substrate between two rolls to squeeze an impregnation liquid of a resin composition in the method described in <Preparation of Carbon Sheet>, the same procedure as in Example 1 was carried out to obtain a carbon sheet and a gas diffusion electrode substrate with configurations as shown in Table 2. Accordingly, the amounts of the binding material adhered to both surfaces were similar to each other, and therefore the values of the average fluorine intensity of the layer X and the layer Y were equal to each other.

As a result of evaluating the fuel cell performance of this gas diffusion electrode substrate, the anti-flooding characteristic was insufficient with the output voltage being smaller than 0.35 V. The results are shown in Table 2.

### (Comparative Example 2)

Except that a resin composition was adhered to one surface by gravure coating in impregnation of the resin composition into the carbon fiber papermaking substrate in the method described in <Preparation of Carbon Sheet>, the same procedure as in Example 1 was carried out to obtain a carbon sheet and a gas diffusion electrode substrate with configurations as shown in Table 2.

As a result of evaluating the fuel cell performance of this gas diffusion electrode substrate, the anti-flooding characteristic was insufficient with the output voltage being smaller than 0.35 V. The results are shown in Table 2.

**[Table 2]**

| | | Example 8 | Example 9 | Example 10 | Comparative Example 1 | Comparative Example 2 |
|---|---|---|---|---|---|---|
| Carbon sheet | Thickness [µm] | 150 | 150 | 150 | 150 | 150 |
| | Areal weight [g/m²] | 46 | 46 | 45 | 47 | 47 |
| | Resin used for hydrophobic treatment | PTFE | PTFE | PTFE | PTFE | PTFE |
| | Ratio of average fluorine intensity (layer X/layer Y) | 1.45 | 1.45 | 1.35 | 1.00 | 2.60 |
| | Ratio of average fluorine intensity (layer Z/layer Y) | 0.40 | 0.85 | 0.20 | 0.66 | 1.40 |
| | Sliding angle (surface Y side) [degree] | 64 | 65 | 64 | 63 | 68 |
| | Melting point of hydrophobic material (DSC method) [degree] | 329 | 331 | 329 | 328 | 330 |
| Composition of filler-containing coating solution for microporous layer | Carbon powder A [parts by mass] | 3.5 | 7.0 | 7.0 | 7.0 | 7.0 |
| | Carbon powder B [parts by mass] | 3.5 | - | - | - | - |
| | Material C [parts by mass] | 2.5 | 2.5 | 2.5 | 2.5 | 2.5 |
| | Material D [parts by mass] | 14.0 | 14.0 | 14.0 | 14.0 | 14.0 |
| | Purified water [parts by mass] | 74.8 | 74.8 | 74.8 | 74.8 | 74.8 |
| Gas diffusion electrode substrate | Areal weight [g/m²] | 60 | 60 | 59 | 61 | 61 |
| | Thickness [µm] | 172 | 170 | 169 | 171 | 169 |
| Anti-flooding characteristic | Output voltage [V] | 0.46 | 0.42 | 0.35 | 0.31 | 0.33 |

### DESCRIPTION OF REFERENCE SIGNS

1: Carbon sheet
2: Surface X
3: Surface Y
4: Layer having average fluorine intensity less than 50% average fluorine intensity
5: Surface XX
6: Surface YY
7: Layer X
8: Layer Z
9: Layer Y
10: Section
11: Distribution of fluorine intensity
12: Average value of fluorine intensity
13: Value of 50% of average value of fluorine intensity

## Claims

1. A gas diffusion electrode substrate, comprising a carbon sheet (1), the carbon sheet (1) being a porous carbon sheet comprising a carbon fiber and a binding material, and
a hydrophobic material is included in the binding material, wherein said hydrophobic material is a fluorine-based polymer,
wherein when among layers obtained by dividing the carbon sheet in a through-plane direction thereof into three equal parts within a section (10) extending from a surface (5) having a 50% average fluorine intensity, which is closest to one surface (2) of the carbon sheet, to a surface (6) having a 50% average fluorine intensity, which is closest to the other surface (3) of the carbon sheet, one of a layer (7) close to one surface (5) has the largest average fluorine intensity, is a layer X, the other one of a layer (9) close to the other surface (6) has a smaller average fluorine intensity than that of the layer X (7), is a layer Y, and a layer (8) between the layer X (7) and the layer Y (9) is a layer Z, and
wherein when a surface of the carbon sheet closest to the layer X is a surface X(2), the gas diffusion electrode substrate has a microporous layer on the surface X side of the carbon sheet (1),
**characterized in that**
the average fluorine intensity of the layer decreases in the order of the layer X (7), the layer Y (9) and the layer Z (8) as determined by the method defined in the description.

2. The gas diffusion electrode substrate according to claim 1, wherein when the average fluorine intensity of the layer Y (9) is 1, the average fluorine intensity of the layer X (7) is 1.30 to 9.00.

3. The gas diffusion electrode substrate according to claim 1 or 2, wherein when the average fluorine intensity of the layer Y (9) is 1, the average fluorine intensity of the layer Z (8) is 0.10 to 0.90.

4. The gas diffusion electrode substrate according to any one of claims 1 to 3, wherein the sliding angle of water at a surface Y (3) is 40 degrees or less as determined by the method defined in the description where the surface Y (3) is a surface of the carbon sheet closest to the layer Y (9).

5. The gas diffusion electrode substrate according to any one of claims 1 to 4, wherein the melting point of the hydrophobic material is within the range of 200 to 320°C as determined by the method defined in the description.

6. The gas diffusion electrode substrate according to any one of claims 1 to 5, wherein the hydrophobic material contains a tetrafluoroethylene-hexafluoropropylene copolymer (FEP) and/or a tetrafluoroethylene-perfluoroalkylvinyl ether copolymer (PFA).

7. The gas diffusion electrode substrate according to any one of claims 1 to 6, wherein the carbon sheet (1) has a thickness of 50 to 230 µm.

8. The gas diffusion electrode substrate according to claim 1, wherein the microporous layer contains a carbon powder, and the carbon powder includes linear carbon having an aspect ratio of 30 to 5000.

9. A fuel cell comprising the gas diffusion electrode substrate according to any one of claims 1 to 8.

## Patentansprüche

1. Gasdiffusionselektrodensubstrat, umfassend eine Kohlenstofflage (1), wobei die Kohlenstofflage (1) eine poröse Kohlenstofflage ist, die eine Kohlenstofffaser und ein Bindemittel umfasst,
wobei ein hydrophobes Material in dem Bindemittel umfasst ist, wobei das hydrophobe Material ein Polymer auf Fluorbasis ist,
wobei aus den Schichten, die durch Teilen der Kohlenstofflage in Richtung normal zur Richtung der Kohlenstofflage in drei gleiche Teile innerhalb eines Abschnitts (10) erhalten werden, der sich von einer Oberfläche (5), die eine 50%ige durchschnittliche Fluorintensität aufweist und die einer Oberfläche (2) der Kohlenstofflage am nächsten liegt, zu einer Oberfläche (6), die eine 50%ige durchschnittliche Fluorintensität aufweist und die der anderen Oberfläche (3) der Kohlenstofflage am nächsten liegt, erstreckt, eine von einer Schicht (7), die nahe einer Oberfläche (5) liegt und die größte durchschnittliche Fluorintensität aufweist, eine Schicht X ist, die andere von einer Schicht (9), die nahe der anderen Oberfläche (6) liegt und eine geringere durchschnittliche Fluorintensität als die Schicht X (7) aufweist, eine Schicht Y ist und eine Schicht (8), die zwischen der Schicht X (7) und der Schicht Y (9) angeordnet ist, eine Schicht Z ist,
wobei, wenn eine Oberfläche der Kohlenstofflage, die der Schicht X am nächsten liegt, eine Oberfläche X(2) ist, das Gasdiffusionselektrodensubstrat eine mikroporöse Schicht auf der Seite der Oberfläche X der Kohlenstofflage (1) aufweist,
**dadurch gekennzeichnet, dass**
die durchschnittliche Fluorintensität der Schicht in der Reihenfolge der Schicht X (7), der Schicht Y (9) und der Schicht Z (8) abnimmt, wie durch das in der Beschreibung definierte Verfahren bestimmt.

2. Gasdiffusionselektrodensubstrat nach Anspruch 1, wobei, wenn die durchschnittliche Fluorintensität der Schicht Y (9) 1 beträgt, die durchschnittliche Fluorintensität der Schicht X (7) 1,30 bis 9,00 beträgt.

3. Gasdiffusionselektrodensubstrat nach Anspruch 1 oder 2, wobei, wenn die durchschnittliche Fluorintensität der Schicht Y (9) 1 ist, die durchschnittliche Fluorintensität der Schicht Z (8) 0,10 bis 0,90 beträgt.

4. Gasdiffusionselektrodensubstrat nach einem der Ansprüche 1 bis 3, wobei der Gleitwinkel von Wasser an einer Oberfläche Y (3) 40 Grad oder weniger beträgt, wie durch das in der Beschreibung definierte Verfahren bestimmt, wobei die Oberfläche Y (3) eine Oberfläche der Kohlenstofflage ist, die der Schicht Y (9) am nächsten liegt.

5. Gasdiffusionselektrodensubstrat nach einem der Ansprüche 1 bis 4, wobei der Schmelzpunkt des hydrophoben Materials innerhalb des Bereichs von 200 bis 320 °C liegt, wie durch das in der Beschreibung definierte Verfahren bestimmt.

6. Gasdiffusionselektrodensubstrat nach einem der Ansprüche 1 bis 5, wobei das hydrophobe Material ein Tetrafluorethylenhexafluorpropylen-Copolymer (FEP) und/oder ein Tetrafluorethylenperfluoralkylvinylether-Copolymer (PFA) umfasst.

7. Gasdiffusionselektrodensubstrat nach einem der Ansprüche 1 bis 6, wobei die Kohlenstoffplatte (1) eine Dicke von 50 bis 230 µm aufweist.

8. Gasdiffusionselektrodensubstrat nach Anspruch 1, wobei die mikroporöse Schicht ein Kohlenstoffpulver umfasst und das Kohlenstoffpulver linearen Kohlenstoff umfasst, der ein Seitenverhältnis von 30 bis 5000 aufweist.

9. Brennstoffzelle, umfassend das Gasdiffusionselektrodensubstrat nach einem der Ansprüche 1 bis 8.

## Revendications

1. Substrat d'électrode à diffusion gazeuse, comprenant une feuille de carbone (1), la feuille de carbone (1) étant une feuille de carbone poreuse comprenant des fibres de carbone et un matériau liant, et
un matériau hydrophobe étant inclus dans le matériau liant, lequel matériau hydrophobe est un polymère à base de fluor,
dans lequel quand, parmi les couches obtenues par division de la feuille de carbone dans la direction du plan traversant de celle-ci en trois parties égales dans une section (10) s'étendant depuis une surface (5) ayant une intensité de fluor moyenne de 50 %, qui est la plus proche d'une surface (2) de la feuille de carbone, jusqu'à une surface (6) ayant une intensité de fluor moyenne de 50 %, qui est la plus proche de l'autre surface (3) de la feuille de carbone, l'une d'une couche (7) proche d'une surface (5) a l'intensité de fluor moyenne la plus importante, est une couche X, l'autre d'une couche (9) proche de l'autre surface (6) a une intensité de fluor moyenne inférieure à celle de la couche X (7), est une couche Y, et une couche (8) entre la couche X (7) et la couche Y (9) est une couche Z, et
dans lequel, quand une surface de la feuille de carbone la plus proche de la couche X est une surface X (2), le substrat d'électrode à diffusion gazeuse a une couche microporeuse sur le côté de la surface X de la feuille de carbone (1),
**caractérisé en ce que**
l'intensité de fluor moyenne de la couche diminue dans l'ordre de la couche X (7), la couche Y (9) et la couche Z (8), comme déterminé par le procédé défini dans la description.

2. Substrat d'électrode à diffusion gazeuse selon la revendication 1, dans lequel, quand l'intensité de fluor moyenne de la couche Y (9) est de 1, l'intensité de fluor moyenne de la couche X (7) est de 1,30 à 9,00.

3. Substrat d'électrode à diffusion gazeuse selon la revendication 1 ou 2, dans lequel, quand l'intensité de fluor moyenne de la couche Y (9) est de 1, l'intensité de fluor moyenne de la couche Z (8) est de 0,10 à 0,90.

4. Substrat d'électrode à diffusion gazeuse selon l'une quelconque des revendications 1 à 3, dans lequel l'angle de glissement de l'eau au niveau d'une surface Y (3) est de 40 degrés ou moins, comme déterminé par le procédé défini dans la description, où la surface Y (3) est une surface de la feuille de carbone la plus proche de la couche Y (9).

5. Substrat d'électrode à diffusion gazeuse selon l'une quelconque des revendications 1 à 4, dans lequel le point de fusion du matériau hydrophobe est situé dans la plage allant de 200 à 320°C, comme déterminé par le procédé défini dans la description.

6. Substrat d'électrode à diffusion gazeuse selon l'une quelconque des revendications 1 à 5, dans lequel le matériau hydrophobe contient un copolymère de tétrafluoroéthylène-hexafluoropropylène (FEP) et/ou un copolymère de tétrafluoroéthylène-perfluoroalkylvinyléther (PFA).

7. Substrat d'électrode à diffusion gazeuse selon l'une quelconque des revendications 1 à 6, dans lequel la feuille de carbone (1) a une épaisseur de 50 à 230 µm.

8. Substrat d'électrode à diffusion gazeuse selon la revendication 1, dans lequel la couche microporeuse contient une poudre de carbone, et la poudre de carbone contient du carbone linéaire ayant un rapport d'aspect de 30 à 5 000.

9. Pile à combustible comprenant le substrat d'électrode à diffusion gazeuse de l'une quelconque des revendications 1 à 8.
